# EUROPEAN PATENT APPLICATION

(11) **EP 1 147 827 A1**
(43) Date of publication of application: **24.10.2001**
(21) Application number: 00108693.3
(22) Date of filing: 21.04.2000
(51) Int. Cl.: B09B 3/00, C03B 5/03, C03B 5/027

(54) **Process for neutralising harmful powders and plant that carries out this method**

(71) Applicant: Montagnani, Giovacchino, 56100 Pisa (IT); Montagnani, Lorenzo, 56100 Pisa (IT)
(72) Inventor: Montagnani, Giovacchino, 56100 Pisa (IT); Montagnani, Lorenzo, 56100 Pisa (IT)
(74) Representative: Celestino, Marco

(57) **Abstract**

A process for neutralising harmful powders that uses a furnace (1) comprising a floor slab (2a) under a basin (3) laterally to which a tapping channel (4) is provided and closed at the top by a cover (5) with the central hole (5a) through which a system of automatic feeding (5b) causes the fall of the powders (10) to dispose of. Through the floor slab (2a) electrodes (12) are inserted into the basin (3) immersed in a molten bath (9) that is formed in the lower part of the basin (3) up to the height of the tapping channel (4), whereby the level of the molten bath (9) in the basin (3) of the furnace (1) exceeds of several centimetres the tapping channel (4). Above the bath (9) three layers are found: a first layer (20) at the viscous state near the melting point contacting the bath (9); a second layer (21) porous and fragile for effect of the heating of the harmful powders freeing CO₂; a third layer (22) of powders that are fed from the above. The third layer (22), for its high characteristics of heat insulating, is at a temperature close to the room temperature, whereby possible sublimated molecules of elements at low vapour tension, for example cadmium and mercury, which may escape from the melting basin, condense in the third layer and are not released further up.

## Description

### Field of the invention

The present invention relates to a method for neutralising harmful powders and similar waste through a process of vitrification.

Furthermore the invention relates to a plant capable of carrying out this method.

### Background of the invention

In many modern industrial processes material capable of causing environmental danger is often produced, such as scraps or waste.

Typical examples of harmful material is:
- "flying ashes " produced in waste incinerating plants;
- powders coming from the ceramic industry;
- dried muds from the galvanic industry;
- dried muds from painting and pickling plants;
- material containing asbestos;
- other dried mud or powder material containing toxic substances (such as heavy metals) or elements such as sulphur, chloride, bromine;
- material contaminated from TCDD, TCDF, IPA.

Such material, characterised normally by high rate of elements or chemical substances, such as heavy metals, organic micropollutants (dioxin and furan), hydrocarbons polyaromatic hydrocarbons, are classified by the law as "dangerous" (formerly "toxic and noxious") and as such are subject to special laws. The problem of their disposal is very complex and expensive for a correct application of the law.

A common requisite to many of the above powder or mud materials, or a mixture thereof, is their mineralogical composition, wherein substances are found typical of the production of glass, such as silicates, alumina, calcium oxides, magnesium, potassium, sulphates, phosphates, etc. The quantitative analysis of such substances shows moreover that the vitreous product has characteristics of low-melting glass (T 1250 °C).

Processes are known of neutralisation by means of aggregation of pollutants in a matrix of concrete. This way their danger is reduced and the blocks of concrete that embed the powders can be carried to special dumps.

Furthermore processes are known of neutralisation by means of vitrification, with preparation of a final vitreous product capable of capturing concretely the elements or the pollutants present in the starting material. Such processes provide the melting of the powders in furnaces, for example tank furnaces, of conventional type, equipped with burners fed with gas oil, with gas or with arc igniters.

The vitrification is a process not more expensive than the neutralisation in concrete, but has the drawback that the existing conventional furnaces, when melting the powders, cause the sublimation of the heavy metals that have low vapor tension as well as the release into atmosphere of polluting gases. For avoiding that, very complex plants are necessary for capturing these substances carried by the flue gas. In particular the sublimation of mercury and cadmium is unavoidable. Furthermore, gaseous substances containing halogenated acids can be released.

In the following description one of the above described powder material, ashes, dried muds or asbestos material, or a mixture thereof, is defined as harmful powder.

### Summary of the invention

It is, therefore, object of the present invention to provide a process for neutralising harmful powders that uses the vitrification method and that prevents from releasing into atmosphere, through the flue gas, some of the polluting elements or substances present in the starting powders, and in particular the substances subject to sublimation and other harmful gas products.

It is another object of the present invention to provide a furnace capable of being fed with harmful powders and of turning them into a vitreous material substantially without freeing noxious combustion products and polluting substances.

These and other objects are achieved by the process for neutralising harmful powders according to the present invention whose characteristic is that it comprises the steps of:
- preheating a furnace with the creation of a vitreous liquid bath of predetermined height;
- arranging in the bath at least a submersed heat source;
- feeding powders from the top of the furnace that are stacked above the bath forming layers with decreasing temperature towards the above, whereby the temperature of the powders of the upper layer remains always below the lowest sublimation temperature of the pollutants present in the powders;
- tapping the vitreous liquid in excess in the bath.

Preferably, the heat source comprises at least two electrodes immersed in the bath. The electrodes are at different voltage and make heat by Joule effect through the liquid of the bath.

Advantageously, three electrodes are provided arranged at 120 degrees with respect to one another and fed with a three-phase current with voltage adjustable between 50 and 300V.

Alternatively, the heat source comprises at least an electrical resistance that produces heat and transmits it to the bath.

The regions with temperature rising towards below comprise, starting from the vitreous bath:
- a first layer contacting the bath at the viscous state near to the melting point with thickness set between 3 and 20cm;
- a second layer contacting the first layer comprising powders at a spongy state and fragile consistency owing to freeing CO₂, with thickness set between 2 and 20cm;
- a third layer contacting the second layer comprising powders at the solid state fed from the above up to a thickness higher than 20-30 cm.

In particular, the third layer of powders is at a temperature close to the room temperature. This way possible substances that sublimate in the first and/or second layer, such as in particular cadmium and mercury, condense in the third layer without reaching the exit above the third layer.

According to another aspect of the invention, a plant for neutralising harmful powders comprises:
- a tank furnace having a floor slab made of refractory material ;
- containing walls made of refractory material arranged above the floor slab and defining a melting basin ;
- a cover plate above the basin with an opening for feeding from the above the harmful powders to dispose of;
- a tapping channel located laterally to the basin at a height capable of tapping a liquid head of predetermined height present in the basin same;
- at least a heat source arranged in the basin below the tapping channel.

Preferably, the heat source comprises at least two electrodes inserted from below crossing the floor slab and protruding above it into the basin substantially below the tapping channel.

In an advantageous embodiment, the electrodes are three and are arranged like a triangle distanced at 120 degrees from one another.

### Brief description of the drawings

Further characteristics and the advantages of the method and of the plant according to the invention for neutralising harmful powders will be made clearer with the following description of an embodiment thereof, exemplifying but not limitative, with reference to the attached drawings, wherein:
- figure 1 shows the diagrammatical elevational view of a furnace for neutralising harmful powders according to the present invention;
- figure 2 shows a top plan view of the furnace of figure 1;
- figure 3 shows an embodiment of the furnace of figures 1 and 2.

### Description of a preferred embodiment

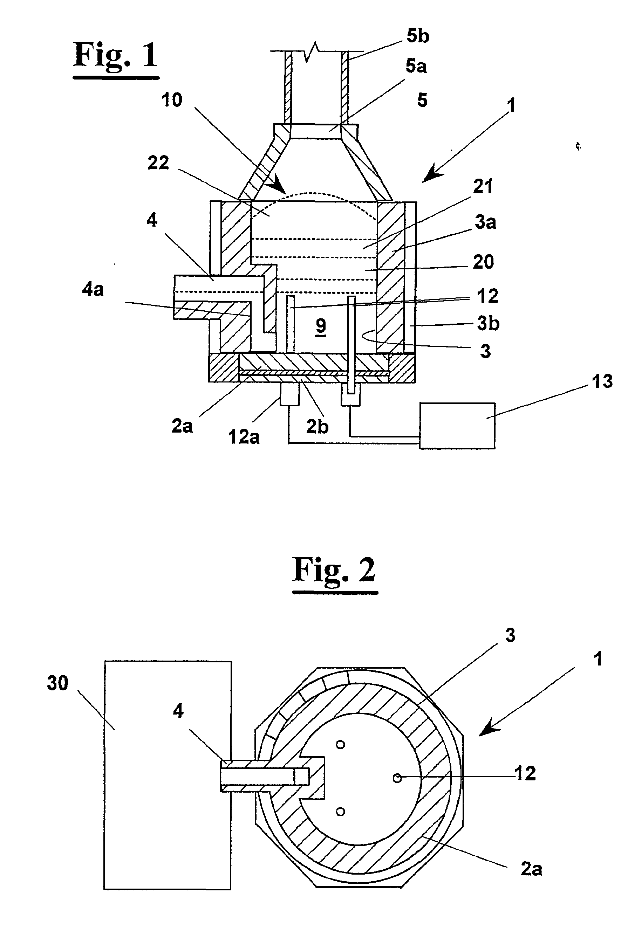

With reference to figure 1, a furnace 1 for neutralising harmful powders comprises a floor slab 2a, for example made of electro-molten refractory material, located on a under-floor 2b made of low density insulating refractory material. Above the floor slab 2a a basin 3 is defined by walls 3a made of electro-molten refractory material, such as staves or bricks and coated by a low density insulating refractory cast 3b.

Laterally to basin 3 a tapping channel 4 is provided supplied by a siphon 4a made of electro-molten refractory material with a anti-wear platinum protection. Basin 3 is closed by a cover 5 in insulating material, preferably of frustum conic shape, with central hole 5a, through which an automatic feeding system 5b causes the fall of the powders 10 to dispose of.

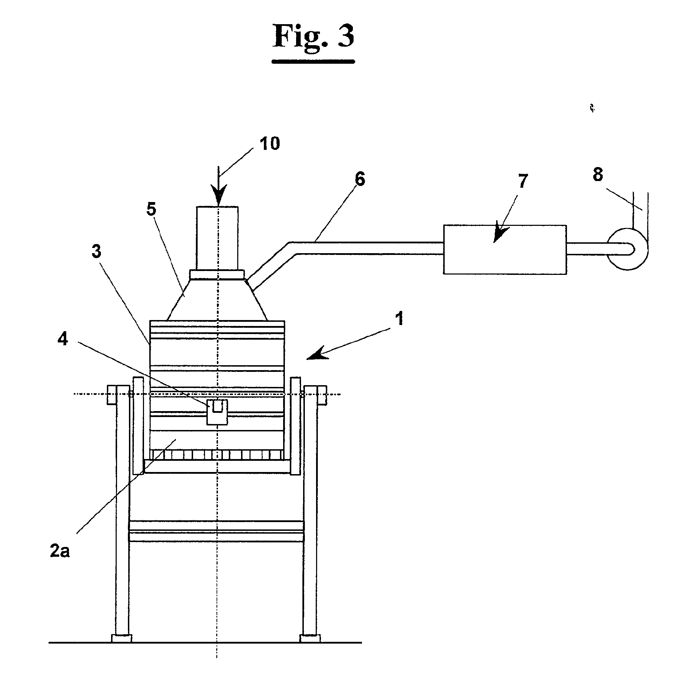

With reference to figure 3, possible gas escaped from basin 3 through cover 5 that would be evacuated through a chimney 6 are held by a safety filter 7 with an actived carbon filler, in particular for capturing possible molecules of heavy metals. The filter 7 is inserted on a conduit 8 for the evacuation of the CO₂ generated by the process for vitrification.

Through floor slab 2a electrodes 12 in molybdenum are inserted into basin 3 and are immersed in a molten bath 9 that is formed in the lowest part of basin 3 up to the level of the tapping channel 4.

Electrodes 12, in particular, are held by cooled electrode supports 12a that are provided together with the electrodes 12 same.

An electric transformer 13 is provided for supplying the electrodes 12 suitable for modulating the voltage in a range preferably set between 80 and 220V. This way the power supply to the furnace can be adjusted.

In the continuous operation of the neutralisation plant the head of the molten bath 9 in basin 3 of furnace 1 exceeds of several centimetres the tapping channel 4.

Above bath 9 three different status of aggregation of the material to dispose of are found proceeding towards the above:
- a first layer 20 at the viscous state near to the melting point contacting bath 9; its thickness is about 10 cm;
- a second layer 21 at the porous state due to the effect of heating the harmful powders freeing CO₂; its consistency is fragile and its thickness is about 5-10cm;
- a third layer 22 of powders that are fed from the above and whose thickness is not normally less than 20-30 cm.

This stratification is advantageous since the third layer 22 of powders, for its high heat insulating characteristics, is at a temperature close to the room temperature. This allows that possible sublimated molecules of elements having low vapour tension, for example cadmium and mercury, which casually can escape from the melting basin, have to pass through a zone wherein they condense and cannot escape any more from the plant or in any case cannot go up further.

The way of operation of the furnace is indicated below.

At the beginning, a start-up procedure is provided and then, once at the steady state, a continuous operation production is reached.

The start-up procedure is done in the following way:
- Furnace 1 is at first empty and has the top of the electrodes 12 at level of the floor slab 2a of the basin 3;
- an auxiliary adjustable industrial burner, for example fed with LPG, methane or other gas, preheats of the furnace, according to the characteristics of the refractory material used, and brings the temperature in the furnace to a value about 800 degrees centigrade;
- in such conditions the furnace is fed with a vitreous material having very low melting point (frit); this way, a starting bath 9 of molten material is prepared;
- as soon as bath 9 has exceeded the head of about 15cm with the starting vitreous material, electrodes 12 are raised gradually from below until they are always and completely immersed in bath 9 same;
- through transformer 13 electrodes 12 are supplied; at the same time the start-up burner is removed; the furnace then begins the continuous operation;
- from the above material 10 that is being neutralised is fed;
- by adjusting the voltage of transformer 13 the power of the system can be adjusted; the temperature and the level of the molten bath 9 rise gradually;
- by further raising the electrodes 12 in two/three steps they arrive at their final height that coincides about with the level of tapping channel 4.

The continuous production at the steady state is then reached that comprises the following steps:
- the harmful powders 10 to treat are fed from the above by the feeder 5b through hole 5a;
- through tapping channel 4 the head in excess of molten bath 9 is tapped progressively;
- the vitreous liquid that is tapped from channel 4 is conveyed into a water basin 30 wherein it is turned into tiny pieces (crushed glass or frit).

Alternatively, the molten glass can be cast into moulds of refractory material obtaining glass ingots.

The disposal capacity of the furnace according to the present invention is flexible. In fact, it can work either at full power, or at partial loads, or for periods in which the material to treat is not fed at all (stand-by). The operation at partial loads can be carried out by reducing the power of the furnace either by varying the voltage between the electrodes, thus reducing the current consumed, or by lowering gradually the electrodes, thus varying the volume of liquid crossed by the current.

In case of forced shutdown electrodes 12 have to be lowered at level of floor slab 2a and the basin has to be emptied an unloading channel located at bottom of the side wall (non shown).

An exemplifying experimental furnace has the following characteristics: capacity of powders disposal from 200 to 300 Kg/m²h; melting temperature from 1200 to 1600 centigrade degrees; energy specific consumption from 0.7 to 1 Kwh/Kg, according to the type of harmful powders to treat; fire weight loss, for elimination of the CO₂, about 18%.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A process for neutralising harmful powders **characterised in that** it comprises the steps of:
- preheating a furnace with creation of a liquid vitreous bath;
- arranging in said bath at least a submersed heat source;
- feeding said powders from the above with stratification onto said bath and formation of layers with decreasing temperature towards the above, wherein the temperature of the powders of an upper layer remains always below the lowest sublimation temperature of any pollutants present in said powders;
- tapping the vitreous liquid exceeding a predetermined bath height.

2. Process for neutralising according to claim 1, wherein said heat source comprises at least two electrodes immersed in said bath, said electrodes being set at a voltage difference and creating heat by Joule effect through said bath.

3. Process for neutralising according to claim 2, wherein at least a unit of three electrodes is provided arranged at 120 degrees with respect to one another and fed with a three-phase current at a voltage set between 50 and 300V for adjusting the power of disposal.

4. Process for neutralising according to claim 2, wherein said source comprises at least an electrical resistance that produces heat and transmits it to said bath.

5. Process for neutralising according to claim 1, wherein said layers with temperature rising towards below comprise, starting from the vitreous bath:
- a first layer contacting the bath at the viscous state near the melting point with thickness set between 3 and 20cm;
- a second layer contacting the first layer comprising powders at the solid state having porous shape and fragile consistency further to freeing CO₂, with thickness set between 2 and 20cm;
- a third layer contacting said second layer comprising powders fed from the above up to a thickness higher than 20-30 cm.

6. Process for neutralising according to claim 5, wherein said third layer of powders is at a temperature close to the room temperature, whereby possible substances that sublimate in said first and/or second layer, such as in particular cadmium and mercury, condense in said third layer without dispersing in the environment or having to be again captured.

7. A plant for neutralising harmful powders comprising:
- a tank furnace having a floor slab made of refractory material ;
- containing walls made of refractory material arranged above said floor slab and defining a melting basin ;
- a cover plate above said basin with an opening for feeding from the above the harmful powders to dispose of;
- a tapping channel located laterally to said basin at a height capable of tapping a liquid bath of predetermined height present in the basin same;
**characterised in that** it comprises
- at least a heat source arranged in said basin below said tapping channel.

8. Plant according to claim 7, wherein said heat source comprises at least two electrodes inserted from below crossing said floor slab and protruding above it into the basin up to a level substantially below said tapping channel.

9. Plant according to claim 8, wherein at least an unit of three electrodes is provided arranged at 120 degrees from one another.

10. Plant according to claim 8, wherein said electrodes can be lowered with respect to said basin through said floor slab for allowing a start-up step and for allowing an adjustment of the power of said furnace.
